# DEMANDE DE BREVET EUROPEEN

(11) **EP 4 512 231 A1**
(43) Date de publication de la demande: **26.02.2025**
(21) Numéro de dépôt: 24195709.1
(22) Date de dépôt: 21.08.2024
(51) Int. Cl.: A01G 13/10, A01G 27/02, A01M 29/12, A01M 29/10, A01M 29/16

(54) **RÉCIPIENT DE CULTURE DE VÉGÉTAUX MUNI D'UN DISPOSITIF DE SONORISATION**

(30) Priorité: 22.08.2023 FR 2308855
(71) Demandeur: Acoudesign, 63100 Clermont-Ferrand (FR)
(72) Inventeur: THOME, Jean-Philippe, 63000 CLERMONT-FERRAND (FR)
(74) Mandataire: Dennemeyer & Associates S.A.

(57) **Abrégé**

[L'invention concerne un récipient (1) de culture de végétaux muni au moins d'un dispositif de sonorisation, caractérisé en ce que le dispositif de sonorisation comprend au moins un transducteur (11) émettant des sons dans une plage de fréquences choisie au moins pour éloigner sélectivement certains insectes ou animaux nuisibles sans affecter les insectes ou animaux dits utiles

## Description

L'invention a trait à un récipient de culture de végétaux muni d'un dispositif de sonorisation.

Ici le terme récipient décrit des pots de fleurs, des jardinières, des bacs ou d'une manière générale tout type de récipient contenant un substrat de culture et dans lequel on fait pousser des végétaux soit dans le cadre d'une utilisation domestique, par exemple un bac à fleurs chez un particulier, soit dans le cadre d'une utilisation professionnelle, par exemple un bac de culture maraîchère. Le terme végétaux doit être considéré comme désignant tout type de végétaux tels des plantes décoratives, des fleurs, des arbustes ou des plantes destinées à la consommation humaine ou animale comme des légumes ou des plantes à usage cosmétique, pharmaceutique ou aromatique. Ces récipients ont des formes et/ou des dimensions variées. Ils sont réalisés en différents matériaux, par exemple en terre cuite, en métal, en céramique ou en polymère et ils sont à simple ou double paroi, équipés ou non d'un dispositif d'arrosage intégré. Par la suite, les termes « récipient », « pot de fleurs » ou « pot » seront indistinctement utilisés pour désigner de tels récipients, quels que soient les végétaux présents.

Actuellement, de plus en plus de pots de fleurs sont dits connectés, c'est-à-dire reliés à un module électronique de commande et de communication permettant à un utilisateur ou automatiquement d'initier certaines actions telles que l'arrosage, la distribution de nutriments, l'éclairage et/ou le chauffage du substrat, cela à distance via, par exemple, un smartphone. Ainsi on connaît par WO-A-2014 194 737 un pot de fleurs qui lorsque la température du substrat est inférieure à une valeur de consigne déclenche le chauffage de celui-ci. De même des pots de fleurs dits musicaux, donc incorporant une enceinte acoustique diffusant de la musique, sont commercialisés. Des dispositifs de diffusion de la lumière, automatique ou non, associés à des pots de fleurs sont également connus. KR-B-101 413 118 décrit un pot de fleurs connecté, capable d'émettre des alertes visuelles via des LED sur la pollution de l'air, équipé d'un capteur du taux d'humidité, pourvu d'un GPS et relié à un panneau photovoltaïque. Il est indiqué que des sons à haute fréquence sont émis pour éloigner les insectes nuisibles.

Néanmoins, que la culture se fasse en intérieur ou en extérieur, qu'elle soit à usage particulier ou professionnel, les plantes cultivées dans des pots sont susceptibles, comme pour tout type de culture de végétaux, d'être attaquées par des insectes ou des animaux dits nuisibles. De même certaines plantes ont des besoins de pollinisation et/ou de fécondation, en particulier par des insectes, des oiseaux ou des mammifères. La pollinisation et/ou la fécondation si elle est effectuée de manière naturelle reste souvent limitée et/ou aléatoire du point de vue quantitatif. Il existe donc un besoin pour éloigner les insectes ou autres animaux dits nuisibles sans affecter la présence des insectes ou animaux dits utiles. L'invention se propose de réaliser un récipient de culture pour végétaux disposant d'un moyen permettant d'éloigner les insectes ou animaux nuisibles sans affecter les insectes ou animaux utiles.

À cet effet l'invention a pour objet un récipient de culture de végétaux muni au moins d'un dispositif de sonorisation, caractérisé en ce que le dispositif de sonorisation comprend au moins un transducteur émettant des sons dans une plage de fréquences comprise entre 40 Hz et 20 kHz et choisie au moins pour éloigner sélectivement certains insectes ou animaux dits nuisibles sans affecter les insectes ou animaux dits utiles et en ce qu'au moins un transducteur émet également des sons dans une plage de fréquences adaptée pour attirer des insectes ou des animaux utiles par exemple des oiseaux, ou des insectes pollinisateurs, en fonction de facteurs externes tels que la météo ou la saison.

Ainsi, grâce à l'invention, on dispose d'un récipient qui va au émettre des sons au moins éloignant les insectes ou animaux nuisibles à la plante cultivée, cela sans nuire à la pollinisation et/ou à la fécondation par d'autres insectes ou au développement de la plante. L'invention permet d'avoir une action phytosanitaire sans emploi de produit chimique, sans affecter la croissance de la plante tout en en favorisant la croissance de la plante en attirant des pollinisateurs.

Selon des aspects avantageux, mais non obligatoires de l'invention, un tel récipient de culture peut comprendre une ou plusieurs des caractéristiques suivantes :

Il comprend au moins un transducteur intégré dans au moins une des parois du récipient.

Il comprend au moins un transducteur intégré dans chaque paroi du récipient.

Il comprend au moins un module de commande et de communication permettant au moins d'activer le au moins un transducteur.

Il comprend un détecteur de présence relié au module de commande afin d'activer automatiquement le au moins un transducteur.

Il comprend une temporisation temporelle reliée au module de commande.

Il comprend également un organe diffusant de la lumière intégré à au moins une paroi du récipient de culture.

Il comprend également un organe d'émission de phéromones.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig.1] est une vue en perspective, d'un récipient de culture de végétaux selon un mode de réalisation de l'invention,
[Fig.2] est une vue en coupe à la même échelle selon le plan II-II à la figure 1, sans les éléments constitutifs du dispositif et
[Fig.3] est une vue en coupe, à la même échelle, de la partie extérieure du récipient des figures 1 et 2 avec les éléments principaux constitutifs du dispositif selon un mode de réalisation de l'invention.

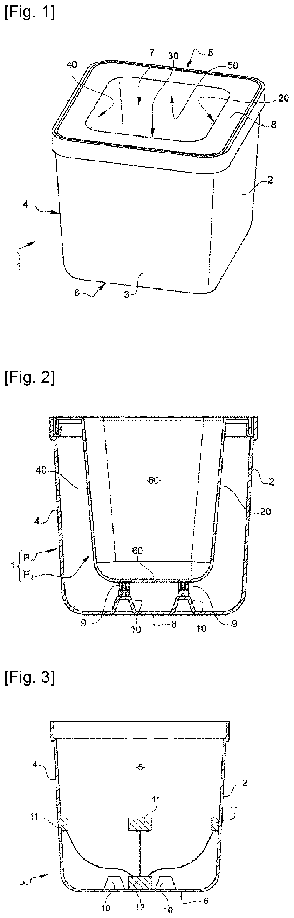

Le récipient 1 illustré à la figure 1 est ici un récipient de culture de végétaux dit à double paroi. Cette double paroi s'étend sur tous les bords et le fond du récipient 1. Le récipient 1 a ici une forme de parallélépipède à base carrée. En variante, il a une autre forme, par exemple cylindrique à base circulaire ou non circulaire, en parallélépipède à base non carrée. De même, les dimensions du récipient sont variables, selon par exemple le type et/ou le nombre de plantes cultivées dans le récipient. Le matériau constitutif du récipient 1 est choisi pour d'une part assurer le maintien sans interaction du substrat de culture et sans libération de substances nocives pour la plante. Le matériau est donc chimiquement neutre, rigide et insensible aux contraintes environnementales. Il peut s'agir de polymères, de métal, de céramique, de terre cuite ou autre. Comme cela ressort de la figure 1, toutes les parois 2 à 5 et le fond 6 définissant la partie externe P sont pleins et ici opaques. En variante, certaines parois ou parties de paroi sont transparentes ou pour le moins translucides, assurant ainsi un aperçu visuel sur l'espace situé entre les parois externes 2 à 5 et les parois internes 20, 30, 40, 50.

Le débouché supérieur 7 du récipient 1 est globalement plan avec un rebord 8 dont la largeur correspond sensiblement à l'espace disponible entre les parois intérieures 20, 30, 40, 50 et extérieures 2 à 5, donc entre les parties externes P et interne P1 définies respectivement par les parois 2 à 5, 20, 30, 40, 50 et les fonds 6 et 60. La largeur du rebord 8 est ici constante entre les parois intérieures 20, 30, 40, 50 et extérieures 2 à 5 ainsi qu'entre le fond extérieur 6 et le fond intérieur 60. En variante, l'espace entre les parties interne P1 et externe P, donc la largeur du rebord 8 est variable.

Comme indiqué dans le préambule de la présente demande, la présence d'une double paroi est connue. Elle permet, généralement, de recevoir une réserve d'eau. Pour cela le fond intérieur 60 est soit poreux soit muni de perforations. Afin d'éviter la déformation et/ou l'écrasement de la partie interne P1 supportant le substrat et les plantes, non illustrés pour plus de lisibilité, tout en conservant un espace constant entre les parois 2 à 5, 20, 30, 40, 50 et les fonds 6 et 60, des plots d'amortissement 9, avantageusement en caoutchouc, sont ménagés sous le fond 60 et en appui sur des reliefs rigides10 ménagés sur la face interne du fond 6. Le nombre de reliefs 10 et de plots 9 est au moins de deux pour chaque type de parois, interne et externe. De manière préférée, mais non obligatoire, il est de quatre. Ainsi on garantit un espace constant entre les parties externe P et interne P1 du récipient 1 tout en rigidifiant l'ensemble, les reliefs 10 et les plots 9 étant régulièrement répartis entre les fonds 6 et 30.

Dans le cadre de l'invention, dans le volume défini par la double paroi on dispose au moins un transducteur 11, par exemple un transducteur inertiel connu en soi. Avantageusement on utilise des transducteurs qui peuvent être intégrés aux parois avant le montage du récipient 1. Le transducteur 11 est fixé sur la face interne d'une paroi externe 2 à 5 et/ou sur le fond 6. Ici, dans un mode de réalisation avantageux, mais non obligatoire, quatre transducteurs 11 sont répartis sur chacune des parois 2 à 5, par exemple dans le tiers inférieur de la hauteur des parois 2 à 5 donc selon la hauteur du récipient 1. En variante le nombre et/ou la position de transducteurs 11 est différente. Les transducteurs 11 sont avantageusement intégrés à la paroi, donc incorporés dans l'épaisseur de cette dernière. Ils ne sont donc pas visibles, ni de l'extérieur ni de l'intérieur, sauf bien entendu si le matériau de la paroi est transparent.

Dans l'exemple, comme cela ressort de la figure 3, le fond 6 reçoit, entre les reliefs 10, un module de commande 12. Pour faciliter la lecture, l'ensemble des éléments nécessaires au fonctionnement de l'invention, à savoir notamment, mais non exclusivement, un module électronique de gestion des transducteurs 11, une source d'énergie telle une batterie, un organe de communication non filaire, un amplificateur audio sont regroupés sous l'expression « module de commande » et illustré par la référence 12. Un tel module de commande 12 peut également comporter d'autres éléments, selon les options équipant le récipient 1. Il peut s'agir, par exemple mais non exclusivement d'un arrosage, d'un éclairage ou plus généralement d'un dispositif émetteur d'ondes lumineuses, d'un émetteur de substances biologiques ou chimiques telles que des phéromones, d'un capteur de présence assurant le déclenchement de transducteurs en cas de présence d'animaux détectée, d'une chronotemporisation, d'un capteur de luminosité, d'un capteur d'humidité, d'un thermomètre ou autre.

Selon l'invention, lorsque les transducteurs 11 sont en position active, soit automatiquement soit manuellement, ils émettent des sons qui se propagent à partir des parois 2 à 5 du récipient 1, essentiellement en direction de l'extérieur, selon toutes les directions. Les sons sont émis dans une plage de fréquences définie, par exemple comprise entre 30 Hz et 20 kHz et plus particulièrement entre 40 Hz et 20 kHz. Une telle plage est choisie, de préférence, pour avoir un effet négatif sur certains insectes ou animaux dits nuisibles en les maintenant éloignés du récipient 1. En complément ou en variante de la plage de fréquences choisie pour éloigner les nuisibles, les transducteurs peuvent émettre, soit automatiquement soit manuellement, des sons dans une autre plage de fréquence choisie elle pour attirer des insectes ou des animaux dits utiles tels que des pollinisateurs ou des prédateurs de nuisibles. En variante, selon des facteurs externes, par exemple, la météo, la saison, la plage des sons émis est variable et choisie pour éloigner certains nuisibles et/ou attirer certains utiles à un moment donné. Ainsi, il est possible d'émettre des sons éloignant les nuisibles pendant un temps ou une période donnée, par exemple la nuit et émettre des sons attirant des utiles à une autre période, par exemple le jour. À titre d'exemple on peut citer des sons éloignant des insectes nuisibles nocturnes et d'autres sons attirant les abeilles le jour. Le choix de la plage de sons émis se fait soit manuellement, l'utilisateur agissant directement sur le module de commande, par exemple à l'aide d'une liaison non filaire à partir d'un ordinateur, d'une tablette ou d'un smartphone, soit automatiquement selon une action préprogrammée sur le module de commande ou à partir des données collectées par le ou les capteurs. Dans le cas d'une gestion automatique des émissions sonores, donc de la mise en marche des transducteurs 11, la gestion est obtenue par apprentissage et/ou par une intelligence artificielle et/ou par programmation préalablement définie.

Si besoin, des actions complémentaires à l'émission des sons par les transducteurs 11 sont déclenchées, séparément ou combinées entre elles. Il peut s'agir de l'émission de phéromones attirant des utiles ou éloignant des nuisibles, de présentation d'appât ou nourriture, d'émission de lumière soit éloignant des nuisibles, par exemple des UV pour les insectes, soit attirant des utiles soit favorisant la croissance végétale.

De plus, les transducteurs 11 génèrent non seulement des sons en faisant rayonner les parois du récipient 1, mais également des vibrations. Selon la fréquence et/ou la longue d'onde de ces vibrations, ces dernières participent à éloigner les nuisibles ou à attirer les animaux ou insectes dits utiles. dans un mode de réalisation, plusieurs transducteurs 11 sont activés simultanément et un décalage de phase ou de fréquence relatif est appliqué à chacun des transducteurs 11. On génère ainsi des battements susceptibles de créer des vibrations de basse fréquence, donc de fréquence inférieure à 10 Hz et d'une amplitude suffisante pour éloigner des nuisibles de plus grandes tailles que des insectes, par exemple des rongeurs.

On conçoit que ces diverses actions complémentaires et/ou combinées à l'émission sonore ne sont pas réalisées en permanence, mais selon les besoins ou à certaines périodes, par exemple à l'aube ou à l'aurore, selon la saison ou selon l'état de croissance du végétal.

La source d'énergie employée peut être soit une batterie, rechargeable ou non, soit une alimentation par secteur, soit une source d'énergie autonome par exemple par des panneaux solaires placés à proximité ou sur une des faces du récipient 1.

L'émission sonore peut être couplée à des émissions lumineuses adaptées pour avoir un effet décoratif. En variante, ces émissions lumineuses peuvent simuler le lever du jour ou le crépuscule.

L'invention permet ainsi d'agir sur l'environnement d'une plante notamment en assurant sa sécurité phytosanitaire, cela de manière discrète et invisible pour un observateur du récipient 1, les transducteurs 11 et le module de commande 12 étant intégrés dans la double paroi du récipient 1. La présence des transducteurs 11 et du module de commande 12 n'affecte ni la croissance ni la place disponible pour la plante dans le récipient 1. On conçoit que d'autres éléments, par exemple un éclairage d'ambiance par les parois lorsque ces dernières sont translucides, des roulettes ou autres peuvent équiper le récipient 1 et ne pas être destinés à la croissance de la plante.

En variante, un tel récipient 1 peut être intégré, de manière amovible ou non, dans un autre objet, que celui-ci soit à usage personnel, professionnel ou collectif. À titre d'exemples non limitatifs, on peut citer un fauteuil, un meuble, un banc public ou non, un abri de bus, un mât d'éclairage ou autre.]

## Revendications

1. Récipient (1) de culture de végétaux muni au moins d'un dispositif de sonorisation, **caractérisé en ce que** le dispositif de sonorisation comprend au moins un transducteur (11) émettant des sons dans une plage de fréquences comprise entre 40 Hz et 20 kHz et choisie au moins pour éloigner sélectivement certains insectes ou animaux dits nuisibles sans affecter les insectes ou animaux dits utiles et **en ce qu'**au moins un transducteur (11) émet également des sons dans une plage de fréquences adaptée pour attirer des insectes ou des animaux utiles par exemple des oiseaux, ou des insectes pollinisateurs, en fonction de facteurs externes tels que la météo ou la saison.

2. Récipient selon la revendication 1, **caractérisé en ce qu'**il comprend au moins un transducteur (11) intégré dans au moins une des parois (2 à 5) du récipient (1).

3. Récipient selon la revendication 2, **caractérisé en ce qu'**il comprend au moins un transducteur (11) intégré dans chaque paroi (2 à 5) du récipient (1).

4. Récipient selon la revendication 1, **caractérisé en ce qu'**il comprend au moins un module de commande et de communication (12) permettant au moins d'activer le au moins un transducteur (11).

5. Récipient selon la revendication 4, **caractérisé en ce qu'**il comprend un détecteur de présence relié au module de commande (12) afin d'activer automatiquement le au moins un transducteur (11).

6. Récipient selon la revendication 4, **caractérisé en ce qu'**il comprend une temporisation temporelle reliée au module de commande (12).

7. Récipient selon la revendication 1, **caractérisé en ce qu'**il comprend également un organe diffusant de la lumière intégré à au moins une paroi (2 à 5) du récipient (11) de culture.

8. Récipient selon la revendication 1, **caractérisé en ce qu'**il comprend également un organe d'émission de phéromones.
